# NEUE EUROPÄISCHE PATENTSCHRIFT

(11) **EP 1 257 508 B2**
(45) Veröffentlichungstag und Bekanntmachung des Hinweises auf die Entscheidung über den Einspruch: **14.01.2009**
(45) Hinweis auf die Patenterteilung: 03.05.2006
(21) Anmeldenummer: 00960598.1
(22) Anmeldetag: 04.09.2000
(51) Int. Cl.: C04B 7/43, C04B 7/42

(54) **VERFAHREN UND ANLAGE ZUR WÄRMEBEHANDLUNG VON FEINKÖRNIGEM GUT**
METHOD AND INSTALLATION FOR HEAT-TREATING FINE-GRAINED PRODUCTS
PROCEDE ET INSTALLATION DE TRAITEMENT THERMIQUE DE PRODUITS A GRANULATION FINE

(30) Priorität: 26.01.2000 DE 10003283
(43) Veröffentlichungstag der Anmeldung: 20.11.2002
(73) Patentinhaber: POLYSIUS Aktiengesellschaft, 59269 Beckum (DE)
(72) Erfinder: BRENTRUP, Ludger, 59302 Oelde (DE)
(74) Vertreter: Tetzner, Michael
(86) Internationale Anmeldenummer: PCT/EP2000/008628
(87) Internationale Veröffentlichungsnummer: WO 2001/055048

(56) Entgegenhaltungen:
- EP-A- 0 854 339
- WO-A-93/19837
- DE-A- 4 026 814
- DE-A- 4 123 306
- DATABASE WPI Week 197711 Derwent Publications Ltd., London, GB; AN 1977-19017y XP002155272 & JP 52 014619 A (NIPPON STEEL CHEM CO)
- Juni 1989 (1989-06), FORSCHUNGSBERICHT BMFT - FB 01 ZH 8610 (VEREIN DEUTSCHER ZEMENTWERKE E.V) , VON A. SCHEUER
- SONDERDRUCK AUS ZKG, JAHRGANG 43 (1990), HEFT 1, S. 1-12
- BAUMBACH, STICKSTOFFOXIDE UND LUFTREINHALTUNG ; BERLIN , SPRINGER VERLAG 1990; S. 341-354
- THOMSEN K. ET AL; ZKG NR. 5/1992 (45. JAHRGANG) S. 231-237
- VERÖFFENTLICHUNG DER LANDESANSTALT FÜR UMWELTSCHUTZ BADEN-WÜRTEMBERG, ISSN: 0949-0485, 1999, S.1-10, ANLAGEN 1-4
- AUFSATZ VON DR. DEUSSNER: 'Klinkerbrand mit reduzierter NOx-Emission' PUBLIKATION KHD HUMBOLD WEDAG AG Bd. 2, 1995, Seiten 79,80, - 84-87
- ZEMENT-KALK-GIPS 1992, Seiten 183 - 186
- ZEMENT-KALK-GIPS 1990, Seiten 1 - 12
- INTERNATIONAL CEMENT REVIEW Juni 1997, Seiten 65 - 67
- 'Ciment, Betons, Chaux,No.820', März 1996 Seiten 176 - 182
- 'World Cement', August 1999 Seiten 49,50,53 - 54
- 'World Cement', August 1996 Seite 16,19,20

## Beschreibung

Die Erfindung betrifft ein Verfahren sowie eine Anlage zur Wärmebehandlung von feinkörnigem Gut entsprechend dem Oberbegriff der Ansprüche 1 bzw. 7.

Bei der Wärmebehandlung von feinkörnigem Gut, insbesondere bei der Herstellung von Zementklinker, wird ein wesentlicher Anteil des Brennstoffes bereits in der Calcinationszone zugesetzt. Dabei erfolgt in der Calcinationszone eine sehr weitgehende Entsäuerung des vorgewärmten Gutes.

Im Hinblick auf die sich verschärfenden Umweltbedingungen versucht man seit etwa einem Jahrzehnt, die Verbrennungsbedingungen im Bereich der Calcinationszone zu optimieren, um den Schadstoffgehalt der Abgase der Brennzone, insbesondere den Stickoxidgehalt (NO_{X}) zu mindern. Zu diesem Zweck ist es bekannt, im Einlaufbereich zur Brennzone eine kleine Brennstoffmenge (maximal etwa 10 Prozent der Gesamtbrennstoffmenge) zuzugeben, um in der die Calcinationszone bildenden Steigleitung eine reduzierende Atmosphäre zu erzeugen. Der restliche Calcinierbrennstoff verbrennt anschließend bei unterstöchiometrischer Luftzugabe. Eine vollständige Nachverbrennung von CO und anderen Rauchgasbestandteilen geschieht in einem oberhalb eines Eintrittes von Kühlzonenabluft (Tertiärluft) befindlichen Abschnitt der Calcinationszone.

Zur Einstellung eines definierten Temperaturfensters, das für die optimale NO_{X}-Reduktion notwendig ist, wird die Zugabe des vorgewärmten Gutes ebenso wie die Zuführung der Kühlzonenabluft gestuft vorgenommen. Dabei liegt die untere Zugabestelle von Gut und Luft etwa in Höhe der Brennstoffzuführung zur Calcinationszone, die zweite Zugabestelle des vorgewärmten Gutes befindet sich oberhalb des oberen (zweiten) Eintritts der Kühlzonenabluft.

Ein derartiges Verfahren ist Gegenstand der EP 0 854 339 A1 der Anmelderin. Es ergeben sich hierbei in Strömungsrichtung der Gase in der Calcinationszone zunächst ein heißer reduzierender Bereich zur NO_{X}-Reduktion und ein heißer oxidierender Bereich zum Abbau von unverbrannten Rauchgasbestandteilen.

Gemäß einem weiteren in der EP 0 854 339 A1 gemachten Vorschlag kann es mitunter von Vorteil sein, in den Reaktionsraum der Calcinationszone zusätzlich Ammoniak (NH₃), eine entsprechende Ammoniak-Lösung oder ein wirksames Additiv zwecks weiterer NO_{X}-Minderung einzudüsen (sogenannter SNCR-Prozeß, vgl. "World Cement" März 1992, S.4 bis 8). Bei dieser Variante des in EP 0 854 339 A1 beschriebenen Verfahrens wird die die Oberluft zuführende Tertiärluft-Teilleitung abgesperrt. Die Verbrennung des in die Calcinationszone eingeführten Brennstoffes erfolgt in oxidierender Atmosphäre. Die Zudosierung von NH₃ oder ähnlichen Mitteln wird nach der Brennstoff- und Tertiärluftzufuhr vorgenommen. Dabei wird das optimale Temperaturfenster für den SNCR-Prozeß durch die Aufteilung des vorgewärmten Gutes eingestellt. Ein im Ofeneinlauf (Einlaufbereich zur Brennzone) angeordneter zusätzlicher Brenner bleibt dabei in Betrieb. Da das aus der Brennzone kommende NO_{X} damit teilweise reduziert wird, kann die Menge des zudosierten NH₃ geringer gehalten werden.

Im Forschungsbericht 01 ZH 8610 des Bundesministeriums für Forschung und Technologie, Umwelttechnik, "Nichtkatalytische Reduktion des NO mit NH3 beim Zementbrennen" von Dr.-Ing. Albert Scheuer, VDZ, Juni 1989 wurden insbesondere die Auswirkungen des Ortes der Zugabe von NH3 für verschiedene Zementofenanlagen untersucht. Für eine Ofenanlage B mit Vorwärmer, Zweitfeuerung, Calcinator und Tertiärluftleitung wurde der optimale Ort der Eindüsung von NH3 in der 10m - Ebene gesehen. Bei einer Ofenanlage E, die keine Tertiärluftleitung aufwies, lag der Eindüsungs-Punkt im absteigenden Ast oder im letzten Abschnitt des Calcinators.

Der durch EP0 854 339 geschilderte bekannte Stand der Technik stellt zwar gegenüber älteren Lösungsvorschlägen bereits eine deutliche Verbesserung dar. Der Erfindung liegt jedoch die Aufgabe zugrunde, das Verfahren und die Anlage dahin weiterzuentwickeln, daß das NO_{X}-Emissionsniveau noch stärker als bisher abgesenkt und zugleich der Verbrauch an ammoniakhaltigen Additiven gemindert und die Brennstoffausnutzung in der Calcinationszone verbessert wird.

Diese Aufgabe wird erfindungsgemäß durch die Merkmale der Ansprüche 1 und 7 gelöst.

Anders als bei der oben erwähnten Variante des in EP 0 854 339 A1 beschriebenen Verfahrens (bei der bei Zugabe von NH₃ die die Oberluft zuführende Tertiärluft-Teilleitung abgesperrt wird) wird bei dem erfindungsgemäßen Verfahren durch die gestufte Tertiärluftzuführung ein großer Teil der Baulänge der Ofenabgasleitung als Reduktionszone betrieben. In diesem Bereich kann damit - noch ehe später die ammoniakhaltigen Additive zur Wirkung kommen - bereits eine sehr starke Minderung des NO_{X}-Gehaltes der Rauchgase erfolgen. Diese vorgelagerte Absenkung des Grundniveaus an NO_{X} ermöglicht zusammen mit einer gezielten Einstellbarkeit der Reaktionsbedingungen in der Calcinationszone, insbesondere durch Wahl eines optimalen Temperaturfensters und eines günstigen O₂-Gehaltes, eine sehr wirkungsvolle weitere Absenkung des NO_{X}-Gehaltes bei verringertem Verbrauch an ammoniakhaltigen Additiven sowie eine günstige Brennstoffausnutzung in der Calcinationszone.

Wird die Vorwärmzone durch mehrere übereinander angeordnete Zyklonstufen gebildet, die das vorzuwärmende Gut nacheinander von oben nach unten durchsetzt, so wird bei einer zweckmäßigen Ausgestaltung des erfindungsgemäßen Verfahrens der aus der zweituntersten Zyklonstufe austretende Gutstrom in zwei Teilströme aufgeteilt, von denen der erste Teilstrom in den reduzierend betriebenen Abschnitt der Calcinationszone, vorzugsweise etwa in Höhe der ersten Kühlzonenabluft-Einführstelle eingeführt wird, während der zweite Teilstrom in den oxidierend betriebenen Abschnitt der Calcinationszone, vorzugsweise oberhalb der zweiten Kühlzonenabluft-Einführstelle eingeführt wird.

Die Teilströme des vorgewärmten Gutes sowie die Luftmengen werden zweckmäßig so bemessen, daß in dem sich an den reduzierenden Abschnitt der Calcinationszone anschließenden, oxidierend betriebenen Abschnitt der Calcinationszone die Gastemperatur zwischen 900 und 950°C und der O₂-Gehalt zwischen 3 und 5 Prozent beträgt.

In dem oxidierend betriebenen Abschnitt der Calcinationszone läuft auch die Nachverbrennung der im reduzierend betriebenen Abschnitt gebildeten, unvollständig ausreagierten Verbrennungsprodukte (CO, Kohlenwasserstoffe usw.) ab. Dazu sind OH-Radikale erforderlich. Diese OH-Radikale sind jedoch auch für den mit den ammoniakhaltigen Additiven ablaufenden Reduktionsprozeß notwendig. Es gibt also im oxidierend betriebenen Abschnitt der Calcinationszone eine Konkurrenzsituation, die entweder für die NO_{X}-Reduktion oder für die Co-Nachverbrennung ungünstig ist.

Wird nun zumindest der überwiegende Teil der ammoniakhaltigen Additive erst in einem Bereich der Calcinationszone zugesetzt, in dem die Nachverbrennung der im reduzierend betriebenen Abschnitt gebildeten, unvollständig ausreagierten Verbrennungsprodukte weitgehend abgeschlossen ist, so kann die geschilderte Konkurrenzsituation wirksam entschärft werden.

Die Calcinationszone enthält einen an die Brennzone anschließenden, aufsteigenden Ast, eine Umlenkzone sowie einen absteigenden Ast und es wird zumindest der überwiegende Teil der ammoniakhaltigen Additive erst im absteigenden Ast der Calcinationszone an dessen Ende, zugesetzt. Ein kleiner Teil der ammoniakhaltigen Additive kann jedoch bereits im aufsteigenden Ast der Calcinationszone oberhalb der zweiten Einführstelle der Kühlzonenabluft zugegeben werden. Von dieser letztgenannten Möglichkeit wird man beispielsweise dann Gebrauch machen, wenn aufgrund der Brennstoffsituation nur ein verhältnismäßig kleiner Anteil unvollständig ausreagierter Verbrennungsprodukte vom reduzierenden Abschnitt in den oxidierenden Abschnitt der Calcinationszone eintritt oder wenn die Nachverbrennung dieser Verbrennungsprodukte aus anderen Gründen besonders rasch vor sich geht.

Um die Temperaturen für die NO_{X}-Reduktion optimal einzustellen, kann es bei dem erfindungsgemäßen Verfahren zweckmäßig sein, den aus der drittuntersten Zyklonstufe austretenden Gutstrom in zwei Teilströme aufzuteilen, von denen der eine Teilstrom in den zur zweituntersten Zyklonstufe führenden Gasstrom und der andere Teilstrom unter Umgehung der zweituntersten Zyklonstufe zusammen mit dem zweiten Teilstrom des aus der zweituntersten Zyklonstufe austretenden Gutstromes in den oxidierend betriebenen Abschnitt der Calcinationszone, vorzugsweise oberhalb der zweiten Kühlzonenabluft-Einführstelle eingeführt wird. Eine solche Gutführung hat zwar insgesamt höhere Gastemperaturen in der Calcinationszone und eine etwas schlechtere Wärmewirtschaftlichkeit zur Folge, gestattet aber eine optimale Einstellung des Temperaturfenster für die NO_{X}-Reduktion.

Zweckmäßig werden die Verfahrensparameter, insbesondere die im. Einlaufbereich zur Brennzone sowie im Bereich des reduzierend betriebenen Abschnittes der Calcinationszone zugesetzten Brennstoffmengen sowie die im Bereich des oxidierend betriebenen Abschnitts der Calcinationszone zugegebene Menge an ammoniakhaltigen Additiven so bemessen, daß im reduzierenden Bereichen insgesamt 70 bis 80 Prozent und im oxidierenden Bereich 20 bis 30 Prozent der Absenkung des Stickoxidgehaltes erreicht wird. Hierbei wird also die Grundabsenkung des NO_{X}-Gehaltes so weit wie möglich im reduzierend betriebenen Bereich der Calcinationszone (sogenanntes MSC-Verfahren) durchgeführt, während die feine Ansteuerung eines möglichst nahe am erforderlichen Grenzwert liegenden Betriebswertes anschließend durch Zugabe ammoniakhaltiger Additive (sogenanntes SNCR-Verfahren) erfolgt. Wesentlich für die erzielte Lösung ist dabei, daß die beiden genannten Schritte innerhalb der Calcinationszone räumlich und zeitlich möglichst weit voneinander getrennt sind: Zumindest der überwiegende Teil der ammoniakhaltigen Additive kommt erst in einem Bereich der Calcinationszone zur Wirkung, in dem die notwendige Folgewirkung des reduzierend betriebenen Abschnitts, nämlich die Nachverbrennung der unvollständig ausreagierten Verbrennungsprodukte, weitgehend abgeschlossen ist.

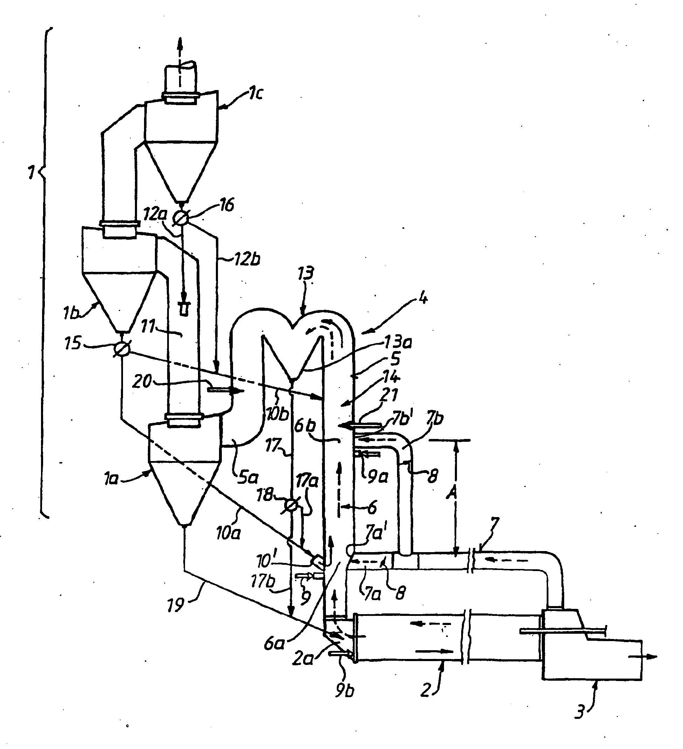

Ein Ausführungsbeispiel einer Anlage zur Durchführung des erfindungsgemäßen Verfahrens ist in der Zeichnung schematisch veranschaulicht.

Die dargestellte Anlage enthält als Vorwärmzone für das feinkörnige Gut einen von heißen Gasen von unten nach oben durchströmten Zyklonvorwärmer 1 mit mehreren im wesentlichen übereinander angeordneten Zyklonstufen. In der Zeichnung sind der Einfachheit halber lediglich die unterste Zyklonstufe 1a, die zweitunterste Zyklonstufe 1b und die drittunterste Zyklonstufe 1c veranschaulicht.

Zum Fertigbrennen des vorerhitzten Gutes ist eine Brennzone in Form eines Drehrohrofens 2 vorgesehen, dem in Fließrichtung des Gutes ein die Kühlzone der Anlage bildender Kühler 3 nachgeordnet ist.

In der Zeichnung symbolisieren durchgehend dargestellte Pfeile das zu behandelnde Gut und seine Fließrichtung, während gestrichelte Pfeile die Gasströme und ihre Strömungsrichtung andeuten.

Zwischen dem Drehrohrofen 2 und dem Zyklonvorwärmer 1 ist eine Calcinationszone 4 angeordnet, die von den heißen Abgasen des Drehrohrofens 2 entsprechend den gestrichelten Pfeilen durchströmt wird. Diese Calcinationszone 4 enthält einen aufsteigenden Ast (Steigleitung) der Ofenabgasleitung, einen absteigenden Ast 5a sowie eine dazwischen angeordnete Umlenkkammer 13.

Oberhalb des Ofeneinlaufs 2a ist im aufsteigenden Ast 5 der Ofenabgasleitung ein Reaktionsraum 6 ausgebildet, an den eine vom Kühler 3 kommende Tertiärluftleitung 7 an zwei Stellen angeschlossen ist: Eine Tertiärluft-teilleitung 7a ist an einer Anschlußstelle 7a' an den unteren Endbereich 6a des Reaktionsraumes 6 angeschlossen, und zwar - in Strömungsrichtung der durch gestrichelte Pfeile dargestellten Ofenabgase - hinter einer unteren Brennstoffzuführung 9; eine zweite Tertiärluft-teilleitung 7b ist an den oberen Endbereich 6b des Reaktionsraumes 6 an einer Anschlußstelle 7b' angeschlossen. Dicht unterhalb dieser Anschlußstelle 7b' für die sogenannte Oberluft kann eine zweite Brennstoffzuführung 9a vorgesehen sein. In den Tertiärluft-Teilleitungen 7a, 7b sind Klappen 8 zur Einstellung der Luftmengen vorgesehen.

Der vertikale Abstand A zwischen den beiden Tertiärluft-Anschlußstellen 7a', 7b' bestimmt die Länge des Reaktionsraumes 6. Die Gasverweilzeit im Reaktionsraum 6 zwischen den Endbereichen 6a und 6b wird zweckmäßig durch Wahl der Länge des Reaktionsraumes 6 auf etwa 0,5 bis 1 s eingestellt. Im Reaktionsraum 6 wird dabei eine reduzierende Atmosphäre zur Minderung des NO_{X}-Gehaltes der Abgase des Drehrohrofens aufrechterhalten.

Vorgewärmtes Gut aus der zweituntersten Zyklonstufe 1b des Zyklonvorwärmers 1 wird über eine Teilereinrichtung 15 und zwei Gutleitungen 10a, 10b in den aufsteigenden Ast 5 der Calcinationszone 4 eingeführt. Die Gutleitung 10a ist hierbei an einer Anschlußstelle 10' an den unteren Endbereich 6a des Reaktionsraumes 6 angeschlossen, während die Gutleitung 10b deutlich oberhalb der Anschlußstelle 7b', d.h. oberhalb des oberen Endbereiches 6b des Reaktionsraumes 6, an die Steigleitung der Calcinationszone 4 angeschlossen ist.

Das vorgewärmte Gut aus der drittuntersten Zyklonstufe 1c wird gleichfalls durch eine Teilereinrichtung 16 in zwei Teilmengen aufgeteilt, die durch Gutleitungen 12a, 12b wie folgt geführt werden: Die durch die Gutleitung 12a transportierte Teilmenge gelangt in die Verbindungsleitung 11, die von der Zyklonstufe la zur Zyklonstufe 1b führt. Diese Gutteilmenge durchsetzt also in üblicher Weise nach der drittuntersten Zyklonstufe 1c die zweitunterste Zyklonstufe 1b. Die andere Gutleitung 12b fördert die von ihr geführte Teilmenge des Gutes unter Umgehung der zweituntersten Zyklonstufe 1b in den Gutteilstrom, der von der Gutleitung 10b in den oxidierend betriebenen Abschnitt der Calcinationszone 4 geführt wird.

Die Umlenkkammer 13 ist mit einem Abscheider 13a versehen. Eine an diesen Abscheider 13a angeschlossene Gutleitung 17 verzweigt sich über einen Teiler 18 in zwei Teilleitungen 17a, 17b. Hiervon mündet die Leitung 17a in die von der zweituntersten Zyklonstufe 1b kommende Gutleitung 10a, so daß dieser Gutstrom aus der Teilleitung 17a bei der Anschlußstelle 10' zurück in die Calcinationszone 4 geführt wird. Die Teilleitung 17b führt das von ihr transportierte Gut in den Ofeneinlauf 2a des Drehrohrofens 2, in den auch das aus der untersten Zyklonstufe la ausgetragene Gut über eine Gutleitung 19 gelangt.

Im Ofeneinlauf 2a ist noch ein Brenner 9b zur Erzeugung einer reduzierenden Atmosphäre im untersten Bereich der Ofensteigleitung vorgesehen. Der oberhalb des oberen Endbereiches 6b des Reaktionsraumes 6 liegende, oxidierend betriebene Bereich der Calcinationszone ist mit 14 bezeichnet.

Die erfindungsgemäße Anlage enthält nun geeignete Einrichtungen, um an wenigstens einer Stelle der Calcinationszone 4, vorzugsweise jedoch an zwei Stellen, NH₃ oder sonstige ammoniakhaltige Additive in die Calcinationszone einzuführen. Eine erste NH₃-Einführstelle 20 befindet sich am Ende des absteigenden Astes 5a der Calcinationszone 4, d.h. kurz vor dem Anschluß dieser Leitung an die unterste Zyklonstufe 1a.

Eine zweite NH₃-Einführstelle 21 befindet sich im aufsteigenden Ast 5 der Calcinationszone 4, und zwar oberhalb der Anschlußstelle 7b' der Tertiärluft (Oberluft), jedoch unterhalb der Stelle, an der die Gutleitung 10b in den oxidierend betriebenen Bereich 14 der Calcinationszone 4 einmündet.

Der überwiegende Teil des NH₃ bzw. der sonstigen ammoniakhaltigen Additive wird an der Einführstelle 20 zugesetzt, d.h. in einem Bereich, in dem die Nachverbrennung der im reduzierend betriebenen Abschnitt (d.h. im Reaktionsraum 6) gebildeten, unvollständig ausreagierten Verbrennungsprodukte weitgehend abgeschlossen ist. Die Nachverbrennung dieser unvollständig ausreagierten Verbrennungsprodukte des Reaktionsraumes 6 beginnt auf Höhe der Anschlußstelle 7b' der Tertiärluft (Oberluft), setzt sich in der Umlenkkammer 13 fort und klingt im absteigenden Ast 5a der Calcinationszone, 4 aus. In Höhe der NH₃-Einführstelle 20 stehen daher genügend OH-Radikale für den mit dem NH₃ ablaufenden Reduktionsprozeß zur Verfügung.

Je nach den gegebenen Brennstoffverhältnissen und den sich hiernach im Bereich 14 einstellenden Verbrennungsbedingungen kann es in Einzelfällen angebracht sein, eine - kleinere - Teilmenge des NH₃ bzw. sonstiger ammoniakhaltiger Additve bereits an der Einführstelle 21 zuzusetzen, an der die Nachverbrennung der aus dem reduzierend betriebenen Abschnitt stammenden, unvollständig ausreagierten Verbrennungsprodukte noch nicht abgeschlossen ist.

Durch Aufteilung der Gutmengen zwischen den Gutleitungen 10a und 10b wird in dem oxidierend betriebenen Bereich 14 der Calcinationszone 4 ein optimales Temperaturfenster zwischen 900 und 950°C geschaffen. Oberhalb des oberen Grenzwertes nimmt die Verbrennung des Reduktionsmittels (unter zusätzlicher NO-Bildung) zu, unterhalb vergrößert sich der NH₃-Schlupf (es entsteht also eine Sekundäremission).

Das NH₃ bzw. sonstige ammoniakhaltige Additive werden an den Einführstellen 20 (und eventuell auch 21) in die Calcinationszone 4 stromabwärts der Anschlußstelle 7b' der oberluftleitung eingedüst, so kann in diesem oxidierend betriebenen Bereich 14 ein optimaler Sauerstoffgehalt zwischen 3 und 5 Prozent sichergestellt werden. Da in dem oxidierend betriebenen Bereich 14 bezüglich der OH-Radikale die geschilderte Konkurrenzsituation zwischen dem mit NH₃ bzw. mit sonstigen ammoniakhaltigen Additiven ablaufenden Reduktionsprozeß und der Nachverbrennung der im Reaktionsraum 6 gebildeten, unvollständig ausreagierten Verbrennungsprodukte besteht, erfolgt zur Entschärfung dieser Konkurrenzsituation die Zugabe des Hauptteiles des NH₃ bzw. der sonstigen ammoniakhaltigen Additive erst an der Einführstelle 20, an der die Nachverbrennung der unvollständig ausreagierten Verbrennungsprodukte weitgehend abgeschlossen ist.

## Patentansprüche

1. Verfahren zur Wärmebehandlung von feinkörnigem Gut, insbesondere zur Herstellung von Zementklinker aus Zementrohmehl, wobei
a) das Gut in einer Vorwärmzone mittels heißer Gase vorgewärmt wird,
b) das vorgewärmte Gut in einer von heißen Abgasen einer Brennzone durchströmten, mit zusätzlichem Brennstoff versorgten Calcinationszone weiter erhitzt und zumindest weitgehend calciniert wird,
c) das calcinierte Gut in einer Brennzone fertig gebrannt und das gebrannte Gut in einer Kühlzone gekühlt wird, wobei Abluft der Kühlzone als Verbrennungsluft in die Calcinationszone eingeführt wird,
c1) wobei die Kühlzonenabluft in zwei Teilluftströmen an unterschiedlichen Stellen in die Calcinationszone eingeführt wird, wobei die Luft- und Brennstoffzuführung derart eingestellt wird, dass der zwischen der ersten und zweiten Einführungsstelle liegende Abschnitt der Calcinationszone unter reduzierenden Bedingungen und der sich anschließende Abschnitt oxidierend betrieben wird, und
d) wobei zur Minderung des Stickoxidgehaltes des Abgases der Brennzone zumindest der Einlaufbereich zur Brennzone durch Zugabe von zusätzlichem Brennstoff reduzierend betrieben wird,
e) wobei ferner zur weiteren Minderung des Stickoxidgehaltes in den nach Einführung von Kühlzonenabluft in das Brennzonenabgas entstandenen und mit zusätzlichem Brennstoff gespeisten Gasstrom der Calcinationszone ammoniakhaltige Additive eingeführt wird, wobei die ammoniakhaltigen Additive erst in einen sich an den reduzierend betriebenen Abschnitt der Calcinationszone anschließenden, oxidierend betriebenen Abschnitt der Calcinationszone eingeführt werden.
und wobei
f) die Calcinationszone einen an die Brennzone anschließenden aufsteigenden Ast, eine Umlenkzone sowie einen absteigenden Ast enthält und zumindest der überwiegende Teil der ammoniakhaltigen Additive erst am Ende des absteigenden Astes der Calcinationszone zugesetzt wird, in dem die Nachverbrennung der im reduzierend betriebenen Abschnitt gebildeten, unvollständig ausreagierten Verbrennungsprodukte weitgehend abgeschlossen ist.

2. Verfahren nach Anspruch 1, bei dem die Vorwärmzone durch mehrere übereinander angeordnete Zyklonstufen gebildet wird, die das vorzuwärmende Gut nacheinander von oben nach unten durchsetzt, **dadurch gekennzeichnet, daß** der aus der zweituntersten Zyklonstufe austretende Gutstrom in zwei Teilströme aufgeteilt wird, von denen der erste Teilstrom in den reduzierend betriebenen Abschnitt der Calcinationszone, vorzugsweise etwa in Höhe der ersten Kühlzonenabluft-Einführstelle eingeführt wird, während der zweite Teilstrom in den oxidierend betriebenen Abschnitt der Calcinationszone, vorzugsweise oberhalb der zweiten Kühlzonenabluft-Einführstelle eingeführt wird.

3. Verfahren nach Anspruch 1, **dadurch gekennzeichnet, daß** ein kleiner Teil der ammoniakhaltigen Additive bereits im aufsteigenden Ast der Calcinationszone oberhalb derzweiten Einführstelle der Kühlzonenabtuft zugesetzt werden.

4. Verfahren nach Anspruch 3, **dadurch gekennzeichnet, daß** der aus derdrittuntersten Zyklonstufe austretende Gutstrom in zwei Teilströme aufgeteilt wird, von denen der eine Teilstrom in den zur zweiuntersten Zyklonstufe führenden Gasstrom und der andere Teilstrom unter Umgehung der zweituntersten Zyklonstufe zusammen mit dem zweiten Teilstrom des aus der zweituntersten Zyklonstufe austretenden Gutstromes in den oxidierend betriebenen Abschnitt der Calcinationszone, vorzugsweise oberhalb der zweiten Kühlzonenabluft-Einführstelte eingeführt wird.

5. Verfahren nach wenigstens einem der vorhergehenden Ansprüche, **dadurch gekennzeichnet, daß** die Teilströme des vorgewärmten Gutes sowie die Luftmengen so bemessen werden, daß in dem sich an den reduzierenden Abschnitt der Calcinationszone anschließenden, oxidierend betriebenen Anschnitt der Calcinationszone die Gastemperatur zwischen 900 und 950°C und der O₂-Gehaft zwischen 3 und 5.% beträgt.

6. Verfahren nach Anspruch 1. **dadurch gekennzeichnet, daß** die Verfahrensparameter, insbesondere die im Einlaufbereich zur Brennzone sowie im Bereich des reduzierend betriebenen Abschnitts der Calcinationszone zugesetzten Brennstoffmengen sowie die im Bereich des oxidierend betriebenen Abschnitts der Calcinationszone zugegebene Menge der ammoniakhaltigen Additive, so bemessen werden, daß in den reduzierenden Bereichen insgesamt 70 bis 80 % und im oxidierenden Bereich 20 bis 30 % der Absenkung des Stickoxidgehaltes erreicht wird.

7. Anlage zur Wärmebehandlung von feinkörnigem Gut, insbesondere zur Herstellung von Zementklinker aus Zementrohmehl, enthaltend
a) eine Vorwärmzone (1) zur Vorwärmung des Gutes mittels heißer Gase,
b) eine von heißen Abgasen einer Brennzone (2) durchströmte, mit zusätzlichem Brennstoff versorgte Calcinationszone (4) zur weiteren Erhitzung und zumindest weitgehenden Calcination des vorgewärmten Gutes,
c) eine Brennzone (2) zum Fertigbrennen des calcinierten Gutes sowie eine Kühlzone (3) zum Kühlen des gebrannten Gutes, wobei Abluft der Kühlzone als Verbrennungsluft in die Calcinationszone (4) eingeführt wird,
c1) wobei eine erste und eine zweite Einführungsstelle zur Zuführung von Kühlzonenabluft in zwei Teilluftströmen an unterschiedlichen Stellen in die Calcinationszone vorgesehen sind, wobei die Luft- und Brennstoffzuführung derart einstellbar ist, dass der zwischen der ersten und zweiten Einführungsstelle liegende Abschnitt der Calcinationszone unter reduzierenden Bedingungen und der sich anschließende Abschnitt oxidierend betrieben werden kann, und
d) wobei zwecks Minderung des Stickoxidgehaltes des Abgases der Brennzone (2) durch reduzierenden Betrieb zumindest des Einlaufbereiches (2a) zur Brennzone in diesem Einlaufbereich ein Brenner zur Zugabe von zusätzlichem Brennstoff vorgesehen ist
e) wobei ferner zur weiteren Minderung des Stickoxidgehaltes des nach Einführung von Kühlzonenabluft in das Brennzonenabgas entstandenen und mit zusätzlichem Brennstoff gespeisten Gasstromes Mittel zur Einführung von ammoniakhaltigen Additiven in die Calcinationszone (4) vorgesehen sind, wobei die ammoniakhaltigen Additive erst in einen sich an den reduzierend betriebenen Abschnitt der calcinationszone anschließenden, oxidierend betriebenen Abschnitt der Calcinationszone eingeführt werden.
und wobei
f) die Calcinationszone einen an die Brennzone anschließenden aufsteigenden Ast, eine Umlenkzone sowie einen absteigenden Ast enthält und die Mittel (20, 21) zur Einführung von ammoniakhaltigen Additiven derart ausgebildet und angeordnet sind, dass zumindest der überwiegende Teil der ammoniakhaltigen Additive erst am Ende des absteigenden Astes der Calcinationszone zugesetzt wird, in dem die Nachverbrennung der im reduzierend betriebenen Abschnitt (6) gebildeten, unvollständig ausreagierten Verbrennungsprodukte weitgehend abgeschlossen ist.

## Claims

1. Method of heat treatment of fine-grained material, particularly for the production of cement clinker from cement raw meal, in which
a) the material is preheated in a preheating zone by means of hot gases,
b) the preheated material is heated further and at least largely calcined in a calcination zone through which hot exhaust gases from a combustion zone flow and which is supplied with additional fuel,
c) the calcined material is finally burnt in a combustion zone and the burnt material is cooled in a cooling zone, exhaust air from the cooling zone being introduced as combustion air into the calcination zone,
c1) the exhaust air from the cooling zone is introduced in two branch air streams at different points into the calcination zone, the delivery of the air and fuel being set in such a way that the section of the calcination zone lying between the first and second introduction points is operated under reducing conditions and the adjoining section is operated under oxidising conditions, and
d) whereby in order to reduce the nitrogen oxide content of the exhaust gas from the combustion zone at least the inlet region to the combustion zone is operated under reducing conditions by the addition of additional fuel,
e) whereby furthermore in order further to reduce the nitrogen oxide content ammonia-containing additives are introduced into the gas stream of the calcination zone which is produced after introduction of exhaust air from the cooling zone into the exhaust gas from the combustion zone and is supplied with additional fuel, whereby the ammonia-containing additives are only introduced into a section of the calcination zone which is operated under oxidising conditions and adjoins the section of the calcination zone which is operated under reducing conditions,
f) the calcination zone comprises an ascending branch adjoining the combustion zone, a deflection zone and a descending branch, and at least the predominant proportion of the ammonia-containing additives is only added at the end of the descending branch of the calcination zone, in which the secondary combustion of the combustion products which are formed in the section which is operated under reducing conditions but are not completely reacted out is largely concluded.

2. Method according to Claim 1, in which the preheating zone is formed by a plurality of cyclone stages which are disposed one above the other and through which the material to be preheated passes in succession from top to bottom, **characterised in that** the stream of material coming from the second-lowest cyclone stage is divided into two branch streams, of which the first branch stream is introduced into the section of the calcination zone which is operated under reducing conditions, preferably approximately at the height of the first introduction point for exhaust air from the cooling zone, whilst the second branch stream is introduced into the section of the calcination zone which is operated under oxidising conditions, preferably above the second introduction point for exhaust air from the cooling zone.

3. Method according to Claim 1, **characterised in that** a small proportion of the ammonia-containing additives is already added in the ascending branch of the calcination zone above the second introduction point for the exhaust air from the cooling zone.

4. Method according to Claim 3, **characterised in that** the material stream coming from the third-lowest cyclone stage is divided into two branch streams, of which one branch stream is introduced into the gas stream leading to the second-lowest cyclone stage and the other branch stream bypasses the second-lowest cyclone stage and is introduced together with the second branch stream of material coming from the second-lowest cyclone stage into the section of the calcination zone which is operated under oxidising conditions, preferably above the second introduction point for the exhaust air from the cooling zone.

5. Method according to at least one of the preceding claims, **characterised in that** the branch streams of the preheated material and the quantities of air are advantageously calculated so that in the section of the calcination zone which is operated under oxidising conditions and adjoins the section of the calcination zone which is operated under reducing conditions the gas temperature is between 900 and 950°C and the O₂ content is between 3 and 5%.

6. Method according to Claim 1, **characterised in that** the method parameters, particularly the quantities of fuel added in the inlet region to the combustion zone and in the region of the section of the calcination zone which is operated under reducing conditions as well as the quantity of ammonia-containing additives added in the region of the section of the calcination zone operated under oxidising conditions, are advantageously calculated so that overall 70 to 80% of the lowering of the nitrogen oxide content is achieved in the reducing regions and 20% to 30% in the oxidising region.

7. Apparatus for the heat treatment of fine-grained material, particularly for the production of cement clinker from cement raw meal, comprising
a) a preheating zone (1) for preheating the material by means of hot gases,
b) a calcination zone (4) through which hot gases from a combustion zone (2) flow and which is supplied with additional fuel for further heating and at least largely calcining the preheated material,
c) a combustion zone (2) for final burning of the calcined material as well as a cooling zone (3) for cooling the burnt material, exhaust air from the cooling zone being introduced as combustion air into the calcination zone (4),
c1) a first and a second connection point for introducing the exhaust air from the cooling zone in two branch air streams at different points into the calcination zone, the delivery of the air and fuel being set in such a way that the section of the calcination zone lying between the first and second introduction points is operated under reducing conditions and the adjoining section is operated under oxidising conditions, and
d) whereby for the purpose of reducing the nitrogen oxide content of the exhaust gas from the combustion zone (2) by reducing operation at least of the inlet region (2a) to the combustion zone a burner is provided in this inlet region for the addition of additional fuel,
e) whereby furthermore in order further to reduce the nitrogen oxide content of the gas stream which is produced after introduction of exhaust air from the cooling zone into the exhaust gas from the combustion zone means and is supplied with additional fuel, means are provided for introducing ammonia-containing additives into the calcination zone (4), whereby the ammonia-containing additives are only introduced into a section of the calcination zone which is operated under oxidising conditions and adjoins the section of the calcination zone which is operated under reducing conditions,
f) and whereby the calcination zone comprises an ascending branch adjoining the combustion zone, a deflection zone and a descending branch, the means (20, 21) for introducing ammonia-containing additives are constructed and disposed in such a way that at least the predominant proportion of the ammonia-containing additives is only added at the end of the descending branch of the calcination zone in which the secondary combustion of the combustion products which are formed in the section (6) which is operated under reducing conditions but are not completely reacted out is largely concluded.

## Revendications

1. Procédé de traitement thermique de matière en grains fins, en particulier pour la fabrication de clinker de ciment à partir de poussière brute de ciment, dans lequel:
a) au moyen de gaz chauds, la matière est préchauffée dans une zone de préchauffage,
b) la matière préchauffée est encore chauffée et au moins largement calcinée dans une zone de calcination, traversée par les gaz de fumée chauds, d'une zone de combustion et alimentée en combustible supplémentaire,
c) la matière calcinée subit une combustion finale dans une zone de combustion, la matière brûlée étant refroidie dans une zone de refroidissement, l'air provenant de la zone de refroidissement étant injecté comme air de combustion dans la zone de calcination,
c1) et l'air qui provient de la zone de refroidissement est injecté en deux écoulements d'air partiel en différents emplacements de la zone de calcination, l'apport d'air et de combustible étant réglés de telle sorte que la partie de la zone de calcination qui est située entre le premier et le deuxième emplacement d'injection soit exploitée en conditions réductrices et la zone suivante est exploitée en conditions oxydantes, et
d) pour diminuer la teneur en oxyde d'azote dans les gaz quittant la zone de combustion, au moins la zone d'entrée dans la zone de combustion est exploitée en conditions réductrices par addition de combustible supplémentaire,
e) en outre, pour encore diminuer la teneur en oxyde d'azote, des additifs contenant de l'ammoniac sont injectés dans l'écoulement de gaz de la zone de calcination, qui est produit après injection de l'air qui provient de la zone de refroidissement dans les gaz de fumée de la zone de combustion qui sont alimentés en combustible supplémentaire, et on outre les additifs contenant de l'ammoniac ne sont pas injectés avant une partie, exploitée en conditions oxydantes, de la zone de calcination, qui se raccorde à la partie, exploitée en conditions réductrices, de la zone de calcination,
f) la zone de calcination contient une branche montante qui se raccorde à la zone de combustion, une zone de déviation ainsi qu'une branche descendante, et au moins la majeure partie des additifs contenant de l'ammoniac est ajoutée à l'extrémité de la branche descendante de la zone de calcination, dans laquelle la combustion complète des produits de combustion qui n'ont pas réagi complètement et qui sont formés dans la partie exploitée en conditions réductrice est largement exclue.

2. Procédé selon la revendication 1, dans lequel la zone de préchauffage est formée par plusieurs étages de cyclone disposés les uns au-dessus des autres, qui sont traversés successivement du haut vers le bas par la matière à préchauffer, **caractérisé en ce que** l'écoulement de matière qui sort de l'avant-dernier étage de cyclone est divisé en deux écoulement partiels dont le premier écoulement partiel est injecté dans la partie, exploitée en conditions réductrices, de la zone de calcination, de préférence sensiblement à la hauteur du premier emplacement d'injection de l'air qui provient de la zone de refroidissement, tandis que le deuxième écoulement partiel est injecté dans la partie, exploitée en conditions oxydantes, de la zone de calcination, de préférence au-dessus du deuxième emplacement d'injection de l'air qui provient de la zone de refroidissement.

3. Procédé selon la revendication 1, **caractérisé en ce qu'**une petite partie des additifs contenant de l'ammoniac a déjà été ajoutée dans la branche montante de la zone de calcination, au-dessus du deuxième emplacement d'injection de l'air qui provient de la zone de refroidissement.

4. Procédé selon la revendication 3, **caractérisé en ce que** l'écoulement de matière qui sort de l'antépénultième étage de cyclone est divisé en deux écoulements partiels parmi lesquels un écoulement partiel est injecté dans l'écoulement de gaz qui conduit à l'avant-dernier étage du cyclone et l'autre écoulement partiel est injecté dans la partie, exploitée en conditions oxydantes, de la zone de calcination, de préférence au-dessus du deuxième emplacement d'injection de l'air qui provient de la zone de refroidissement, en contournant l'avant-dernier étage de cyclone en même temps que le deuxième écoulement partiel de l'écoulement de matière qui sort de l'avant-dernier étage de cyclone.

5. Procédé selon au moins l'une des revendications précédentes, **caractérisé en ce que** les écoulements partiels de matière préchauffée ainsi que le débit d'air sont définis de telle sorte que dans la partie, exploitée en conditions oxydantes, de la zone de calcination, qui se raccorde à la partie réductrice de la zone de calcination, la température du gaz soit comprise entre 900 et 950°C et la teneur en O₂ entre 3 et 5%.

6. Procédé selon la revendication 1, **caractérisé en ce que** les paramètres du procédé, en particulier les débits de combustible injecté dans la partie d'entrée de la zone de combustion ainsi que dans la zone de la partie exploitée en conditions réductrices de la zone de calcination, ainsi que le débit d'additif contenant de l'ammoniac ajouté dans la région de la partie exploitée en conditions oxydantes de la zone de calcination, sont définis de telle sorte que l'on obtienne de 70 à 80 % de la diminution de la teneur en oxyde d'azote dans les parties réductrices et de 20 à 30 % de cette diminution dans la partie oxydante.

7. Installation de traitement thermique de matière en grains fins, en particulier pour la fabrication de clinker de ciment à partir de poussière brute de ciment, qui contient:
a) une zone de préchauffage (1) pour le préchauffage de la matière à l'aide de gaz chauds,
b) une zone de calcination (4) traversée par les gaz de fumée chauds d'une zone de combustion (2) et alimentés en combustible supplémentaire, pour encore chauffer et assurer une calcination au moins très large de la matière préchauffée,
c) une zone de combustion (2) pour la combustion finale de la matière calcinée ainsi qu'une zone de refroidissement (3) pour refroidir la matière brûlée, l'air quittant la zone de refroidissement étant injecté dans la zone de calcination (4) comme air de combustion,
c1) un premier et un deuxième emplacement d'injection de l'air qui provient de la zone de refroidissement pour injecter en deux écoulements d'air partiel en différents emplacements de la zone de calcination, l'apport d'air et de combustible étant réglés de telle sorte que la partie de la zone de calcination qui est située entre le premier et le deuxième emplacement d'injection soit exploitée en conditions réductrices et la zone suivante est exploitée en conditions oxydantes,
d) et, pour diminuer la teneur en oxyde d'azote des gaz de fumée de la zone de combustion (4) en exploitant en conditions réductrices au moins la zone d'entrée (2a) de la zone de combustion, un brûleur destiné à l'injection de combustible supplémentaire est prévu dans cette zone d'entrée,
e) et en outre, pour encore diminuer la teneur en oxyde d'azote de l'écoulement de gaz produit après l'injection de l'air qui provient de la zone de refroidissement dans les gaz de fumée de la zone de combustion et alimentés en combustible supplémentaire, des moyens d'injection d'additifs contenant de l'ammoniac dans la zone de calcination (4) sont prévus, et on outre les additifs contenant de l'ammoniac ne sont pas injectés avant une partie, exploitée en conditions oxydantes, de la zone de calcination, qui se raccorde à la partie, exploitée en conditions réductrices, de la zone de calcination,
f) la zone de calcination contient une branche montante qui se raccorde à la zone de combustion, une zone de déviation ainsi qu'une branche descendante, et les moyens (20, 21) d'injection d'additifs contenant de l'ammoniac sont configurés et disposés de telle sorte qu'au moins la majeure partie des additifs contenant de l'ammoniac est ajoutée à l'extrémité de la branche descendante de la zone de calcination, dans la zone de calcination (4) dans laquelle la combustion finale des produits de combustion qui n'ont pas réagi complètement et qui sont formés dans la partie (6) exploitée en conditions réductrices soit largement exclue.
